# EUROPÄISCHE PATENTSCHRIFT

(11) **EP 0 990 364 B1**
(45) Veröffentlichungstag und Bekanntmachung des Hinweises auf die Patenterteilung: **06.06.2001**
(21) Anmeldenummer: 99908731.5
(22) Anmeldetag: 29.03.1999
(51) Int. Cl.: H04Q 7/38

(54) **ROAMING-VERFAHREN**
ROAMING METHOD
PROCEDE D'ITINERANCE

(30) Priorität: 17.04.1998 CH 88598
(43) Veröffentlichungstag der Anmeldung: 05.04.2000
(73) Patentinhaber: Swisscom Mobile AG, 3050 Bern (CH)
(72) Erfinder: STADELMANN, Anton, Niklaus, CH-3065 Bolligen (CH); HIRZEL, Werner, CH-3145 Niederscherli (CH); HEUTSCHI, Walter, CH-3303 Jegenstorf (CH)
(74) Vertreter: BOVARD AG - Patentanwälte
(86) Internationale Anmeldenummer: CH9900130
(87) Internationale Veröffentlichungsnummer: WO9955107

(56) Entgegenhaltungen:
- WO-A-92/19078
- WO-A-98/10614

## Beschreibung

Die vorliegende Erfindung betrifft ein Roaming-Verfahren und zugehörige Vorrichtungen. Die Erfindung betrifft insbesondere ein Roaming-Verfahren und zugehörige Vorrichtungen, die auf den GSM-Spezifikationen basieren und die eine Weiterentwicklung des internationalen Roamings sind.

Unter Roaming wird der Betrieb eines GSM-Endgerätes ausserhalb des Heimnetzes verstanden. Die Erfindung kann aber auch für das Problem des Roamings zwischen verschiedenen GSM- und/oder Nicht-GSM-Netzen, zum Beispiel für das Roaming zwischen Netzen, die nach verschiedenen Standards wie z.B. GSM, UMTS, Intelligent Networks (IN) usw. arbeiten, eingesetzt werden.

Mit einem sogenannten "Indirect Roaming" kann ein Betreiber eines Mobilfunknetzes, das heisst ein Mobilbetreiber, seinen Mobilteilnehmern eine flächendeckende Versorgung anbieten, ohne dass er das ganze Funknetz in seinem lizensierten Gebiet erstellen muss. Zudem kann durch "Indirect Roaming" auch der schnelle Zugang zum weltweiten Roaming ermöglicht werden.

Das Patentdokument WO98/10614, dessen Inhalt hier durch Referenz integriert ist, beschreibt ein Verfahren für ein "Indirect Roaming", welches einem Teilnehmer eines Heimmobilfunknetzes (Home Public Land Mobile Network, HPLMN) ermöglicht, sich einem besuchten Mobilfunknetz (Visited Public Land Mobile Network, VPLMN) ohne Roaming-Abkommen mit dem Heimmobilfunknetz (HPLMN) anzuschliessen, wobei der Anschluss durch Mittel, zum Beispiel eine IMSI-Nummer (IMSI = International Mobile Subscriber Identity) und eine MSISDN-Nummer (MSISDN = Mobile Subscriber Integrated Services Digital Network), erfolgt, die von einem Partnernetz (Partner Public Land Mobile Network, PPLMN) zur Verfügung gestellt werden, das ein Roaming-Abkommen einerseits mit dem Heimmobilfunknetz (HPLMN) und andererseits mit dem besuchten Mobilfunknetz (VPLMN) hat.

Bei dem in WO98/10614 beschriebenen Verfahren enthält jede SIM-Karte (SIM = Subscriber Identity Module) der Teilnehmer des HPLMN zwei IMSI-Nummern. Jeder IMSI-Nummer wird eine unterschiedliche Rufnummer (MSISDN) zugeteilt. Die erste IMSI-Nummer gehört dem Nummerbereich des Heimmobilfunknetzes HPLMN, die zweite dem Nummerbereich des Partnernetzes PPLMN. Um sich einem besuchten Netz (VPLMN-NR, NR = No Roaming), das kein Roaming-Abkommen mit dem HPLMN hat, einzuloggen, kann der Teilnehmer die erste IMSI (vom HPLMN) durch die zweite IMSI (vom PPLMN) austauschen, und wird dadurch im besuchten Netz (VPLMN) wie ein Teilnehmer vom Partnemetz (PPLMN) betrachtet.

Da im in WO98/10614 beschriebenen Verfahren jeder IMSI eine andere, unterschiedliche MSISDN zugeteilt ist, müssen die Anrufe mit der ersten MSISDN für den Teilnehmer mit einem aufwendigen Mechanismus, in einer sogenannten UBICOM-Drehscheibe, umgeleitet werden. Teilnehmerspezifische Daten, zum Beispiel Anrufumleitungen, Zusatznummern, usw., sind ausserdem ganz konventionell der IMSI zugeordnet und somit nur im Heimmobilfunknetz (HPLMN) oder in besuchten Mobilfunknetzen (VPLMN-WR, WR = With Roaming) mit einem Roaming-Abkommen mit dem HPLMN verfügbar.

In der Patentanmeldung WO 92119078 wird ein Verfahren für ein Mobiltelefonsystem beschrieben, gemäss welchem zwei IMSI auf einem Identifizierungsmodul eines Teilnehmers gespeichert werden, die beide in der Heimdatei (Home Location Register, HLR) einer gemeinsamen MSISDN zugeordnet sind, und die jeweils vom Benutzer entweder durch verschiedenes Positionieren des Identifizierungsmoduls im Mobilgerät oder über Eingabemittel des Mobilgeräts gewählt werden können.

Eine Aufgabe der Erfindung ist daher ein Verfahren und ein System anzubieten, die die oben genannten Nachteile vermeiden.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere wird dieses Ziel durch die Erfindung dadurch erreicht, dass im erfindungsgemässen Verfahren, welches einem Teilnehmer eines Heimmobilfunknetzes (Home Public Land Mobile Network, HPLMN) ermöglicht, sich an ein besuchtes Mobilfunknetz (Visited Public Land Mobile Network, VPLMN) ohne Roaming-Abkommen mit dem Heimmobilfunknetz (HPLMN) anzuschliessen, indem der Teilnehmer ein Identifizierungsmodul mit einer ersten Mobilfeilnehmeridentifizierung (International Mobile Subscriber Identity, IMSI) aus dem Nummerbereich seines Heimmobilfunknetzes (HPLMN) und mit einer zweiten Mobilteilnehmeridentifizierung (IMSI) aus dem Nummerbereich eines Partnernetzes (Partner Public Land Mobile Network, PPLMN) bekommt, welches Partnernetz (PPLMN) über zusätzliche Roaming Abkommen verfügt, den beiden genannten Mobilteilnehmeridentifizierungen (IMSI) eine gemeinsame Rufnummer (Mobile Subscriber Integrated Services Digital Network, MSISDN) zugeteilt wird. Erfindungsgemäss wird zudem (Untervariante a1 ) die erste Mobilteilnehmeridentifizierung (IMSI) - aus dem Nummerbereich des Heimmobilfunknetzes (HPLMN) - in der Heimdatei (Home Location Register, HLR) dieses Heimmobilfunknetzes abgelegt und die zweite Mobilteilnehmeridentifizierung (IMSI) - aus dem Nummerbereich des Partnernetzes (PPLMN) - aus der ersten Mobilteilnehmeridentifizierung (IMSI) umgerechnet. Die Zuteilung einer gemeinsamen Rufnummer (MSISDN) auf die verschiedenen Mobilteilnehmeridentifizierungen (IMSI) hat insbesondere den Vorteil, dass ein Teilnehmer über diese eine Rufnummer (MSISDN) erreicht werden kann, auch wenn er sich mit verschiedenen Mobilteilnehmeridentifizierungen (IMSI) in seinem Heimmobilfunknetz (HPLMN), respektive in einem besuchten Mobilfunknetz (VPLMN) einloggt. Die Zuweisung von zwei (oder mehreren) Mobilteilnehmeridentifizierungen (IMSI) an einen Teilnehmer, eine aus dem Nummerbereich des Heimmobilfunknetzes (HPLMN) und eine aus dem Nummerbereich eines Partnemetzes (PPLMN), hat überdies den Vorteil, dass der Teilnehmer nicht bloss auf die Roaming-Abkommen des Betreibers des Partnemetzes (PPLMN) angewiesen ist, sondern dass es er zusätzlich auch von eventuell später vereinbarten Roaming-Abkommen seines Heimnetzbetreibers profitieren kann. Wie eingangs bereits erwähnt wurde, bezieht sich die Erfindung auf Mobilnetze gemäss dem GSM-Standard, sie kann aber auch in anderen Mobilnetzen, beispielsweise in UMTS-Mobilnetzen (UMTS = Universal Mobile Telephone System), oder insbesondere auch für das Roaming zwischen verschiedenen GSM- und/oder Nicht-GSM-Netzen eingesetzt werden.

In einer bevorzugten Ausführungsvariante aktiviert das Identifizierungsmodul die zweite Mobilteilnehmeridentifizierung (IMSI) aus dem Nummerbereich eines Partnemetzes (PPLMN), wenn es sich mit der ersten Mobilteilnehmeridentifizierung (IMSI) aus dem Nummerbereich seines Heimmobilfunknetzes (HPLMN) in einem Netz nicht einloggen kann. Die Aktivierung einer alternativen Mobilteilnehmeridentifizierung (IMSI) kann in verschiedenen Ausführungsvarianten, welche als gemeinsame situationsabhängige oder als separate Varianten realisiert werden können, automatisch oder durch den Teilnehmer, beispielsweise mittels der Eingabemittel seines Endgeräts, eingeleitet werden.

Vorzugsweise werden für mindestens gewisse der mindestens zwei mit einer selben Rufnummer (MSISDN) verknüpften Mobilteilnehmeridentifizierungen (IMSI) dem betreffenden Teilnehmer separate Rechnungen erstellt, während für mindestens gewisse andere der mindestens zwei mit einer selben Rufnummer (MSISDN) verknüpften Mobilteilnehmeridentifizierungen (IMSI) dem betreffenden Teilnehmer eine gemeinsame Rechnung erstellt wird. Diese situationsspezifische Verrechnung hat den Vorteil, dass sie sehr flexibel ist und dass je nach Anwendung, und nicht nur im Zusammenhang mit "Indirect Roaming", einem Teilnehmer für verschiedene Verwendungszwecke separate Rechnungen erstellt werden können, wobei jeweils die dem Zweck und der Verrechnung entsprechende Mobilteilnehmeridentifizierung (IMSI) aktiviert wird, beispielsweise verschiedene Mobilteilnehmeridentifizierungen (IMSI) für Dienst- und Privatgebrauch.

Nachfolgend wird eine Ausführung der vorliegenden Erfindung anhand eines Beispieles beschrieben. Das Beispiel der Ausführung wird durch die folgenden beigelegten Figuren illustriert:

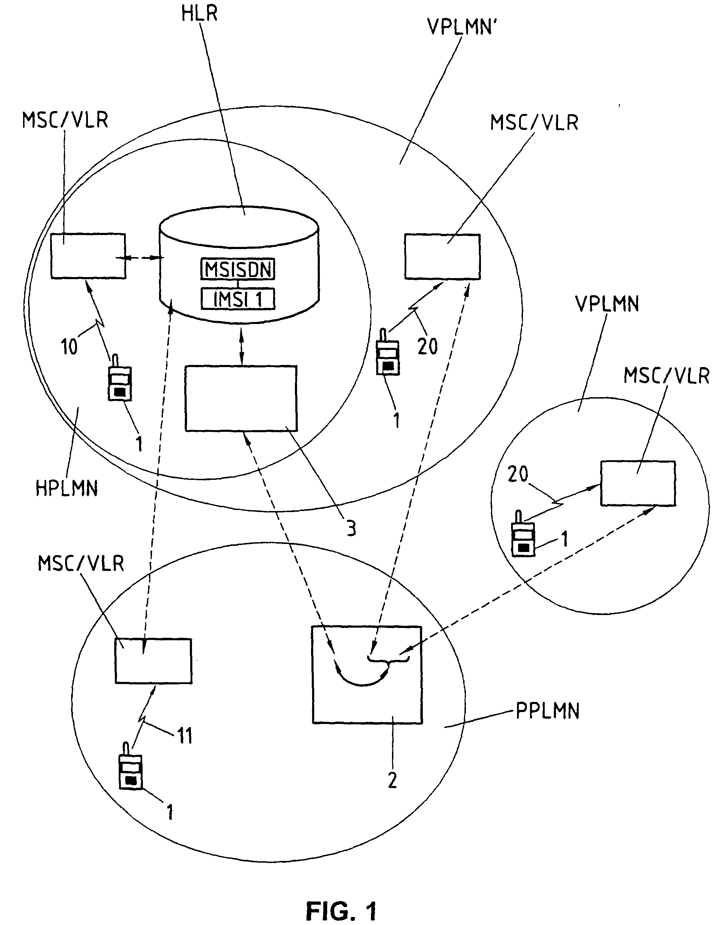

Figur 1 zeigt ein Übersichtsdiagramm, welches schematisch die Signalisierungsbeziehungen beim Einbuchen gemäss der Variante a1) darstellt, in welcher Variante eine mit einer Rufnummer (MSISDN) verknüpfte Mobilteilnehmeridentifizierung (IMSI) in der Heimdatei (HLR) registriert ist.

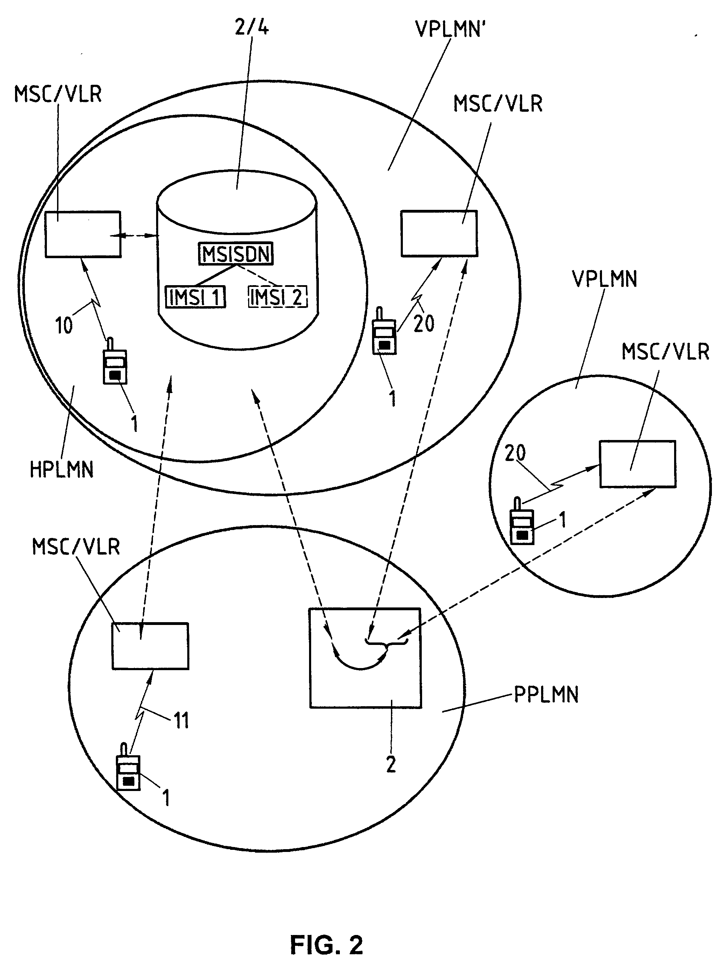

Figur 2 zeigt ein Übersichtsdiagramm, welches schematisch die Signalisierungsbeziehungen beim Einbuchen gemäss einer möglichen Variante a2) darstellt, in welcher Variante zwei mit einer gemeinsamen Rufnummer (MSISDN) verknüpfte Mobilteilnehmeridentifizierungen (IMSI) in der Heimdatei (HLR) registriert sind.

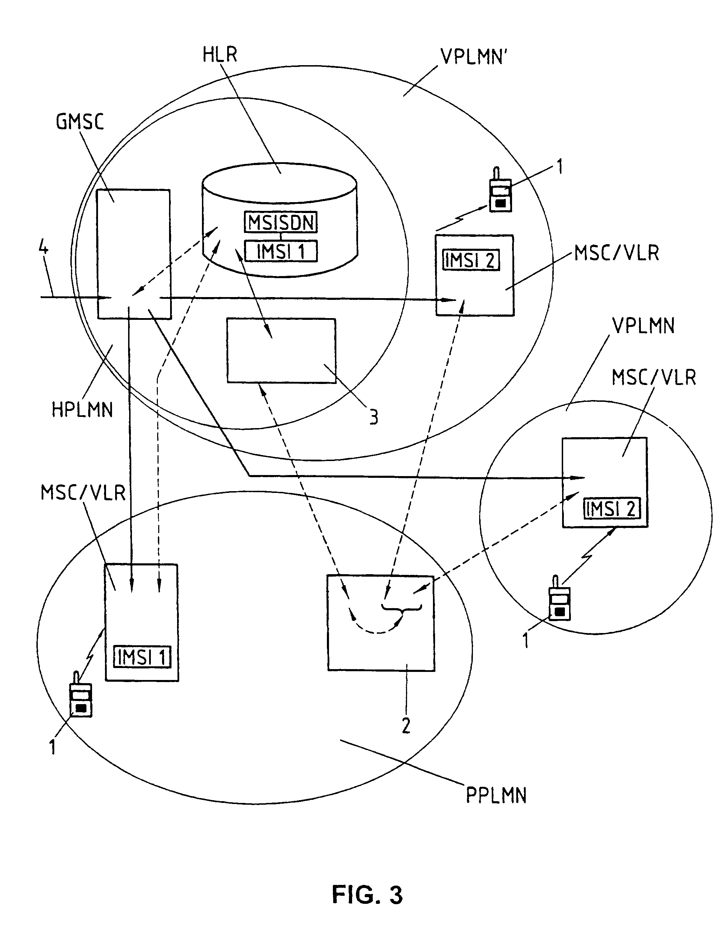

Figur 3 zeigt ein Übersichtsdiagramm, welches schematisch die Signalisierungsbeziehungen bei einer terminierenden Verbindung gemäss der Variante a1) darstellt, in welcher Variante eine mit einer Rufnummer (MSISDN) verknüpfte Mobilteilnehmeridentifizierung (IMSI) in der Heimdatei (HLR) registriert ist.

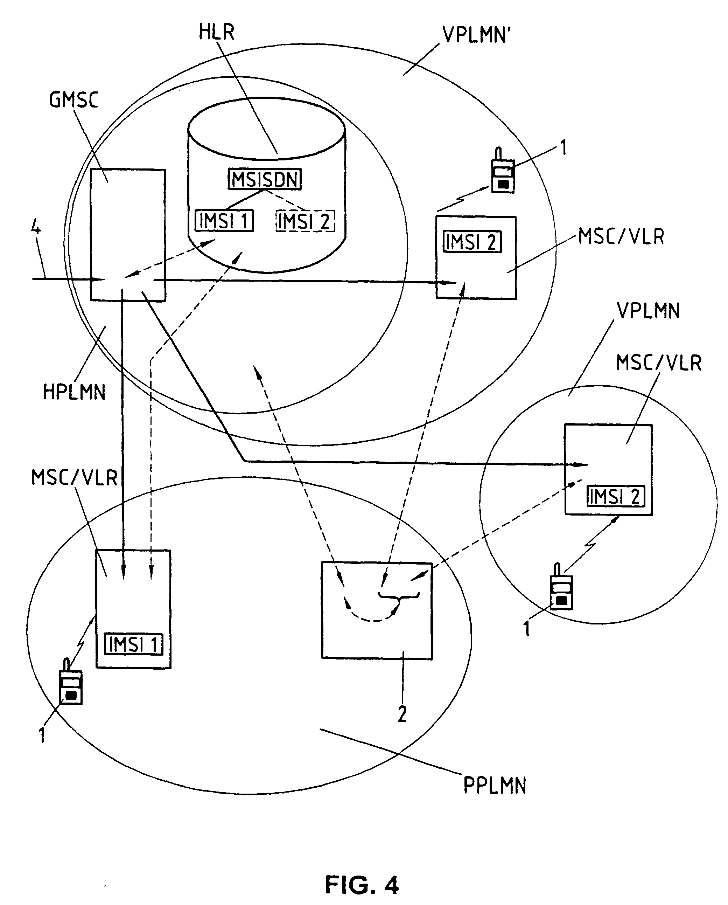

Figur 4 zeigt ein Übersichtsdiagramm, welches schematisch die Signalisierungsbeziehungen bei einer terminierenden Verbindung gemäss der möglichen Variante a2) darstellt, in welcher Variante zwei mit einer gemeinsamen Rufnummer (MSISDN) verknüpfte Mobilteilnehmeridentifizierungen (IMSI) in der Heimdatei (HLR) registriert sind.

Gemäss der vorliegenden Erfindung erstellt und betreibt ein lizensierter Heimmobilnetzbetreiber (nachfolgend Liz-Betreiber genannt) in seinem lizensierten Heimmobilfunknetzgebiet HPLMN (siehe Figuren 1 bis 4) eine oder mehrere Mobile Switching Centre/Home Location Register (MSC/HLR) und ein Heimmobilfunknetz, beispielsweise ein Mobilfunknetz basierend auf dem GSM-, dem UMTS- oder einem anderen Mobilnetz-Standard, gemäss seinen wirtschaftlichen Überlegungen (eventuell nur in den Ballungszentren).

Der Liz-Betreiber des Heimmobilfunknetzgebiets HPLMN ermöglicht seinen Kunden (Teilnehmern) den Betrieb von Mobilendgeräten 1 in besuchten Mobilfunknetzen VPLMN, VPLMN' ausserhalb des eigenen Netzes durch die indirekte Roaming-Funktion. Zu diesem Zweck stellt ein Partnerbetreiber eines Partnernetzes PPLMN seine Roaming-Beziehungen dem Liz-Betreiber zur Verfügung.

Beim internationalen Roaming basiert die Mobifteilnehmeridentifizierung gemäss GSM-Spezifikationen auf der IMSI-Nummer (IMSI = International Mobile Subscriber Identity = Mobilteilnehmeridentifizierung). Der Partnerbetreiber stellt dem Liz-Betreiber deshalb einen IMSI-Nummerbereich aus dem Partnerbetreiber-Nummerbereich zur Verfügung. Folgende zwei Varianten sollen zunächst beschrieben werden:
Variante **a):**
   Ein Identifizierungsmodul, zum Beispiel eine SIM-Karte (Subscriber Identity Module), welche mit einem Mobilfunkendgerät 1 entfernbar verbunden ist, enthält zwei IMSI-Nummem, die erste IMSI-Nummer IMSI1 aus dem Nummerbereich des Liz-Betreibers, die zweite IMSI-Nummer IMSI2 aus dem Nummerbereich des Partnerbetreibers. Beiden IMSI-Nummern IMSI1, IMSI2 wird eine gemeinsame Rufnummer MSISDN (MSISDN-Nummer, Mobile Subscriber Integrated Services Digital Network Nummer) zugeteilt. Alle teilnehmerspezifischen Daten, wie beispielsweise Anrufumleitungen, Zusatznummern für Fax- und Datenübertragung etc., sind der Rufnummer MSISDN zugeordnet und sind somit unabhängig von der jeweils im Netz verwendeten IMSI-Nummer IMSI1, IMSI2 immer verfügbar.
   Der Vorteil dieser bevorzugten Variante a) besteht darin, dass den Teilnehmern auch IMSI-Nummern IMSI1 des Liz-Betreiber-Netzes HPLMN zugeteilt sind. Dadurch kann ein Liz-Betreiber eigene Roaming-Partnerbeziehungen aufbauen. Zudem müssen bei einer eventuell späteren Aufhebung des indirekten Roamings die SIM-Karten nicht ausgetauscht werden.
Variante **b):**
   Die SIM-Karte enthält nur eine IMSI-Nummer IMSI2. Diese stammt aus dem IMSI-Nummerbereich des Partnerbetreibers. Dieser IMSI-Nummer IMSI2 ist eine Rufnummer MSISDN aus dem Nummerbereich des Liz-Betreibers zugeteilt.
   Der Vorteil dieser Variante b) besteht darin, dass sie bezüglich SIM-Karte, Mobilfunkendgerät 1 und Netz eine einfachere Lösung ist. Die Variante b) weist jedoch vor allem hinsichtlich den Möglichkeiten der Weiterentwicklung des Liz-Betreibers grosse Nachteile auf, insbesondere weil parallel zum indirekten Roaming der Aufbau von direkten Roaming-Beziehungen nicht möglich ist. Zudem müssen die SIM-Karten bei einer Aufhebung des indirekten Roamings ausgetauscht werden. Deshalb wird diese Variante b) im folgenden nicht näher beschrieben.

Die Mobilteilnehmer des Heimmobilfunknetzgebiets HPLMN werden vorzugsweise in einer oder mehreren Helmdatelen HLR (Home Location Register) des Liz-Betreibers registriert, der damit auch die Kundenverwaltung übernimmt

Für die bevorzugte Variante **a)** werden für die Handhabung der zwei IMSI-Nummern IMSI1, IMSI2 folgende Untervarianten beschrieben:
Erfindungsgemässe Untervariante **a1)**, (siehe Figur 1):
In der Heimdatei HLR des Liz-Betreibers wird nur die IMSI-Nummer IMSI1 des Liz-Betreibers registriert. Die zugehörige IMSI-Nummer IMSI2 des Partnerbetreibers des Partnemetzes PPLMN unterscheidet sich von der IMSI-Nummer IMSI1 des Liz-Betreibers nur im Mobile Country Code (MCC), im Mobile Network Code (MNC) und bei Bedarf in zwei (h₁h₂) oder zusätzlichen weiteren Ziffern der Mobile Subscriber Identity Number (MSIN), wie im folgenden Beispiel dargestellt wird:

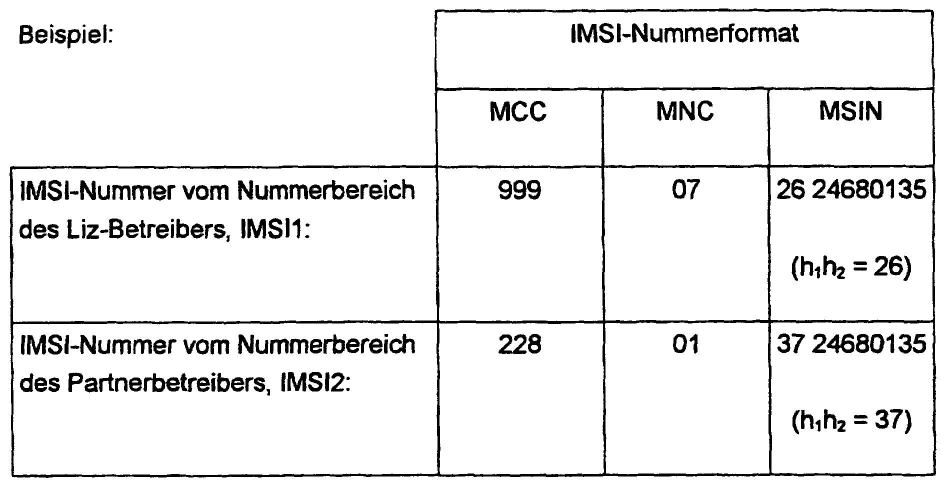

In den SS7-MAP-Meldungen (SS7 = Signalisierungssystem Nr. 7, MAP = Mobile Application Part), welche zwischen dem Partnerbetreiber und dem Liz-Betreiber übertragen werden, wird die IMSI-Nummer IMSI1, IMSI2 jeweils im Block 3 (siehe Figur 1, respektive Figur 3) umgerechnet (IMSI2 vom Partnerbetreiber in die IMSI1 vom Liz-Betreiber, und umgekehrt). Der Block 3 ist beispielsweise ein programmiertes Softwaremodul, das beispielsweise im gleichen Computer wie die Heimdatei HLR des Liz-Betreibers oder in einem beliebigen anderen, dafür geeigneten Netzwerk-Element installiert und ausgeführt wird. Der Signalisierungsverkehr zwischen dem Partnemetz PPLMN und dem Heimmobilfunknetz HPLMN, respektive zwischen dem Partnemetz PPLMN und dem Roaming-Partnemetz VPLMN, ist in der Figur 1 durch die gestrichelten Doppelpfeile schematisch dargestellt.

Gemäss dem GSM-Standard wird aus Sicherheitsgründen eine SIM-Karte beim Einbuchen im Netz authentifiziert. Die Authentifikation bezieht sich auf die IMSI-Nummer. Weil in der Untervariante a1 ) nur die Liz-Betreiber-IMSI-Nummer IMSI1 in der Heimdatei HLR registriert ist, besteht nur eine einzige Authentizität (Ki-Schlüssel) für die beiden IMSI-Nummern IMSI1, IMSI2. Deshalb muss die SIM-Karte im Mobilgerät 1 ebenfalls mit einer einzigen Authentizität (Ki-Schlüssel) für die beiden IMSI-Nummem IMSI1, IMSI2 programmiert sein.

### Mögliche Untervariante a2), (siehe Figur 2):

In der Heimdatei HLR des Liz-Betreibers sind beide IMSI-Nummern IMSI1, IMSI2 registriert und mit einer gemeinsamen Rufnummer MSISDN verknüpft. Nur eine der beiden IMSI-Nummem IMSI1, IMSI2 ist jeweils aktiv (was in der Figur 2, respektive in der Figur 4 durch den gestrichelten Block um die IMSI2 angedeutet werden soll), abhängig davon, in welchem Netz sich der Kunde zuletzt eingebucht hat. Die Heimdatei HLR enthält beispielsweise eine Liste von Mobilteilnehmeridentifizierungen (IMSI-Nummem), welche zudem für jede Mobilteilnehmeridentifizierung (IMSI-Nummer) IMSI1, IMSI2 ein Aktiv-Flag umfasst, welche so gesetzt werden können, dass gleichzeitig jeweils nur eine Mobilteilnehmeridentifizierung IMSI1, IMSI2 als aktiv gilt. Für den Fachmann gibt es verschiedene Methoden, um eine Mobilteilnehmeridentifizierung IMSI1, IMSI2 in der entsprechenden Liste in der Heimdatei HLR als aktiv zu markieren, beispielsweise kann dies während dem Location Update vorgenommen werden, welches gemäss dem GSM-Standard ausgeführt wird, wenn sich ein betreffender Teilnehmer mit seinem Mobilf unkendgerät 1 in einem Visitor Location Register MSCNLR einbucht. Beide IMSI-Nummem IMSI1, IMSI2 verfügen aber auch über individuelle Authentizitäten (Ki-Schlüssel), womit sich die Untervariante a2) auch auf der SIM-Karten-Seite von der Untervariante a1) unterscheidet.

An dieser Stelle soll überdies darauf hingewiesen werden, dass die Untervariante a2) ebenfalls für andere Anwendungen eingesetzt werden kann, beispielsweise für zwei SIM-Karten mit gemeinsamer Rufnummer MSISDN oder für zwei IMSI-Nummern IMSI1, IMSI2 auf einer einzigen SIM-Karte zur Unterscheidung von verschiedenen Anwendungszwecken, wie beispielsweise private und geschäftliche Anrufe. Zum Beispiel kann für die Verrechnung von ausgehenden Anrufen (originating calls) von einem nicht dargestellten Verrechnungszentrum je nach Anwendung für jede oder zumindest für gewisse mit einer selben Rufnummer MSISDN verknüpften Mobilteilnehmeridentifizierung IMSI1, IMSI2 eine separate Rechnung gestellt, oder für alle oder zumindest für gewisse mit einer selben Rufnummer MSISDN verknüpften Mobilteilnehmeridentifizierung IMSI1, IMSI2 eine gemeinsame Rechnung gestellt werden. Das Verrechnungszentrum teilt dafür entsprechend mehrere Rechnungsadressen allen oder zumindest gewissen Mobilteilnehmeridentifizierung IMSI1, IMSI2 zu, respektive teilt eine gemeinsame Rechnungsadresse der Rufnummer MSISDN oder zumindest gewissen Mobilteilnehmeridentifizierungen IMSI1, IMSI2 zu. Für die Berechnung der Kosten können beispielsweise, wie üblich, die entsprechenden Call Data Records verwendet werden.

In allen oben aufgeführten Varianten **a1), a2)** und **b)** befindet sich die Heimdatei HLR, wie bereits erwähnt, vorzugsweise im Netz des Liz-Betreibers.

Gemäss GSM-Spezifikationen wird die Adresse der Heimdatei HLR, das heisst die HLR-Adresse, für das Senden von SS7-Meldungen zur Heimdatei HLR u.a. aus der IMSI-Nummer abgeleitet (Nummerformat CCITT E.212 wird in CCITT E.214 umgerechnet). Weil die aus den besuchten Netzen VPLMN, VPLMN' im Partnemetz PPLMN eintreffenden Meldungen die Adresse des Partnernetzes PPLMN enthalten, müssen entweder die Meldungsadressen, das heisst die Global Title im SS7 Signalling Connection Control Part (SCCP), umgerechnet oder die Meldungen ohne SCCP-Routing im öffentlichen Netz, beispielsweise über Mietleitungen oder über das Internet, ins Heimmobilfunknetzgebiet HPLMN des Liz-Betreibers weitergeleitet werden. In Meldungen, welche von der Heimdatei HLR zu den besuchten Visitor Location Register (VLR) MSCNLR gesendet werden, muss eine HLR-Adresse aus dem Nummerbereich des Partnemetzes PPLMN als Absender enthalten sein, um das Rücksenden von Meldungen zu gewährleisten. Die Übersetzung der SS7 SCCP globalen Titel (Global Title) wird, wie in den Figuren 1 bis 4 illustriert, im Block 2 durchgeführt, wobei der Block 2 beispielsweise ein programmiertes Softwaremodul ist, das zum Beispiel im gleichen Computer wie die Heimdatei (Home Location Register) des Partnernetzes PPLMN oder wie das Mobile Switching Centre/ Visitor Location Register MSCNLR des Partnernetzes PPLMN oder in einem beliebigen anderen, dafür geeigneten Netzwerk-Element installiert und ausgeführt wird.

Weil SS7-Meldungen für das Einbuchen von den besuchten Netzen VPLMN, VPLMN' via Partnernetz PPLMN in die Heimdatei HLR des Liz-Betreibers geleitet werden (Location Update), hat der Partnerbetreiber die Möglichkeit, die vom Liz-Betreiber für das indirekte Roaming verwendeten IMSI-Nummerbereiche zu kontrollieren.

Bei der Variante **a)** (mit Untervariante **a1)** und möglicher Untervariante **a2)**), welche mit zwei IMSI-Nummem IMSI1, IMSI2 arbeiten, geschieht das Einbuchen (Location Update) in Abhängigkeit des Aufenthaltsortes.

Solange der betreffende Mobilteilnehmer sich im versorgten Gebiet des Liz-Betreibers aufhält, das heisst im Heimmobilfunknetzgebiet HPLMN oder in einem besuchen Netz PPLM mit einem direkten Roaming-Abkommen mit dem Betreiber des Heimmobilfunknetzes HPLMN, bucht sich das Mobilgerät 1 automatisch mit der IMSI-Nummer IMSI1 aus dem Nummerbereich des Liz-Betreibers in dieses Netz ein, wie dies in den Figuren 1 und 2 durch die Pfeile 10, respektive 11 illustriert wird. Dieses Vorgehen entspricht den standardisierten GSM-Prozeduren.

Verlässt der Mobilteilnehmer des Liz-Betreibers das eigene Versorgungsgebiet HPLMN, so kann sich der Teilnehmer mit der Partner-IMSI IMSI2 automatisch oder manuell in ein besuchtes Netz VPLMN eines Betreibers, der ein Roaming-Abkommen mit dem Partnerbetreiber hat, einbuchen, wie dies in den Figuren 1 und 2 durch die Pfeile 20 illustriert wird. Je nach gewünschtem Komfort für den Teilnehmer, beispielsweise je nachdem ob der IMSI-Wechsel manuell oder automatisch ausgeführt wird, können dafür spezielle Funktionen auf der SIM-Karte oder gegebenenfalls auch in den Mobilgeräten 1 implementiert sein. Vorzugsweise erfolgt der IMSI-Wechsel mittels einer programmierten Softwarefunktion, ohne dass beispielsweise die SIM-Karte dem Mobilgerät 1 entnommen oder manipuliert werden muss. Vorzugsweise läuft die programmierte Softwarefunktion in der SIM-Karte. Eine programmierte Softwarefunktion in der Infrastruktur des Netzes kann aber auch vorgezogen werden. In diesem letztgenannten Fall wird die erste oder die zweite IMSI-Nummer IMSI1, IMSI2 mittels speziellen Meldungen, die an das betreffende Mobilfunkendgerät 1 übermittelt werden, beispielsweise mittels SMS- (SMS = Short Message Services) oder USSD-Meldungen (USSD = Unstructured Supplementary Services Data), aus der Infrastruktur des Netzes aktiviert.

Ankommende Anrufe werden aufgrund der Rufnummer MSISDN, welche sich im Nummerbereich des Liz-Betreibers befindet, ins Netz des Liz-Betreibers geroutet. Weil die Adresse des Visitor Location Register (VLR) MSCNLR, in welchem sich der Teilnehmer eingebucht hat, in der Heimdatei HLR des Liz-Betreibers registriert ist, erfolgt der Funktionsablauf (Anforderung der Roaming-Nummer und Verbindungsaufbau mit der Roaming-Nummer) grundsätzlich gemäss GSM-Spezifikationen. In den Figuren 3 und 4 sind die Signalisierungsbeziehungen für eine in einem Mobilfunkendgerät 1 terminierende Verbindung, das heisst für einen in einem Mobilfunkendgerät 1 ankommenden Anruf für die Untervariante **a1)**, respektive für die mögliche Untervariante **a2)**, jeweils schematisch dargestellt Als Beispiel ist in den Figuren 3 und 4 der ankommende Anruf durch den Pfeil 4 illustriert, der über ein Gateway Mobile Switching Centre GMSC in das Heimmobilfunknetz HPLMN gelangt In den Figuren 3 und 4 illustrieren die gestrichelten Doppelpfeile schematisch die Signalisierung für die Anfrage einer Roaming-Nummer (Roaming Number Request), während die ausgezogenen Pfeile den Verbindungsaufbau mit der erhaltenen Roaming-Nummer vereinfacht darstellen, da je nach Gegebenheit auch Routing über andere Netze damit verbunden sein kann. In den SS7-MAP-Meldungen, welche für die Anforderung der Roaming-Nummer zum jeweiligen Visitor Location Register MSCNLR gesendet werden, muss aber als Absender eine HLR-Adresse aus dem Nummerbereich des Partnerbetreibers stehen und in der MAP-Meldung muss die IMSI-Nummer des Partnerbetreibers enthalten sein. Die Figuren 3 und 4 illustrieren zudem, wie durch das oben beschriebene Einbuchen gemäss den Figuren 1 und 2 der betreffende Teilnehmer mit seinem Mobilfunkendgerät 1 im Partnernetz PPLMN mit der IMSI-Nummer IMSI1 aus dem Nummerbereich des Liz-Betreibers, respektive in den besuchten Netzen VPLMN, VPLMN' mit der IMSI-Nummer IMSI2 aus dem Nummerbereich des Partnerbetreibers in das jeweilige Visitor Location Register MSC/VLR eingetragen ist.

Einige Roaming-Partner verlangen für terminierende Verbindungen ebenfalls eine Gebühr. Die Abrechnungen erfolgen via Roaming Daten- Clearing und Finanz-Clearing des Partnerbetreibers, in gleicher Weise wie nachstehend für abgehende Verbindungen beschrieben ist.

Abgehende Anrufe werden wie "Roaming-Fälle" des Partnerbetreibers behandelt, d.h.
- Rufaufbau gemäss GSM-Spezifikation.
- Abrechnung via Roaming Daten- und Finanz-Clearing des Partnerbetreibers.
- Die Rückverrechnung und das Daten-Clearing dieser Verbindungen an den Liz-Betreiber erfolgen mit einem separaten Clearing durch den Partnerbetreiber.

Terminierende Kurzmeldungen (Short Messages) werden gemäss GSM-Spezifikationen aufgrund der in der Heimdatei HLR registrierten Adresse des betreffenden Visitor Location Register, das heisst der VLR-Adresse und der IMSI-Nummer zugestellt. Die zum Visitor Location Register MSC/VLR gesendete SS7-Meldung muss als Absender eine IMSI-Nummer IMSI2 aus dem Nummerbereich des Partnerbetreibers enthalten und in der MAP-Meldung muss die IMSI-Nummer IMSI2 des Partnerbetreibers enthalten sein. Erzeugte Kurzmeldungen (Short Messages) werden gemäss GSM-Spezifikationen zur Kurzmeldungsdienstzentrale (Short Message Service Centre, SMSC) des Liz-Betreibers und/oder zu anderen SMSC's gesendet.

In Ländern, respektive in versorgten Gebieten, in denen der Liz-Betreiber direkte Roaming-Abkommen mit anderen Mobilbetreibern hat (Heimmobilfunknetzgebiet HPLMN oder Partnernetz PPLMN respektive besuchtes Netz mit Roaming-Abkommen), funktioniert das Roaming mit der IMSI-Nummer IMSI1 aus dem Nummerbereich des Liz-Betreibers gemäss GSM-Spezifikationen.

In Ländern, respektive in Gebieten, in denen kein besuchtes Netz VPLMN, VPLMN' ein direktes Roaming-Abkommen mit dem Heimnetz HPLMN hat, kann sich der Teilnehmer mit der Partner-IMSI IMSI2 automatisch oder manuell in ein Roaming-Netz VPLMN, VPLMN' des Partners einbuchen.

Die Abrechnung dieser Roaming-Verbindungen erfolgt via Roaming Daten-Clearing und Finanz-Clearing des Partnerbetreibers mit entsprechender Rückverrechnung an den Liz-Betreiber via Daten-Clearing.

### Legende der Bezugszeichen

- 1: Mobilfunkgerät.
- 2: Übersetzung des SS7 SCCP globalen Titels (Global Title).
- 3: Umrechnung der IMSI des Liz-Betreibers (IMSI1) in die IMSI des Partnerbetreibers (IMSI2) und umgekehrt.
- 4: Anruf mit Mobile Subscriber Integrated Services Digital Network Nummer (MSISDN) vom Nummerbereich des Liz-Betreibers.
- 10: Einbuchen mit IMSI des Liz-Betreibers (IMSI1).
- 11: Einbuchen mit IMSI des Liz-Betreibers (IMSI1), (herkömmliches internationales Roaming).
- 20: Einbuchen mit IMSI des Partnerbetreibers (IMSI2).
- GMSC: Gateway Mobile Switching Centre.
- HLR: Heimdatei (Home Location Register).
- HPLMN: Heimmobilfunknetzgebiet des Liz-Betreibers oder Liz-Betreiber-Netz (Home Public Land Mobile Network).
- IMSI1: International Mobile Subscriber Identity Nummer vom Nummerbereich des Liz-Betreibers.
- IMSI2: International Mobile Subscriber Identity Nummer vom Nummerbereich des Partnerbetreibers.
- MSC/VLR: Mobile Switching Centre/Visitor Location Register.
- MSISDN: Mobile Subscriber Integrated Services Digital Network Nummer vom Liz-Betreiber.
- PPLMN: Partnernetz ("Indirect Roaming"-Anbieter), (Partner Public Land Mobile Network).
- VPLMN: Besuchtes Netz eines Roaming Partners des Partnerbetreibers (weltweit), (Visited Public Land Mobile Network).
- VPLMN': Besuchtes Netz im Land des Liz-Betreibers (Visited Public Land Mobile Network).

## Patentansprüche

1. Telekommunikationsverfahren, das einem Teilnehmer eines Heimmobilfunknetzes (HPLMN) ermöglicht, sich an ein besuchtes Mobilfunknetz (VPLMN, VPLMN') ohne Roaming-Abkommen mit dem Heimmobilfunknetz (HPLMN) anzuschliessen, indem einem Teilnehmer eine erste Mobilteilnehmeridentifizierung (IMSI1 ) aus dem Nummerbereich seines Heimmobilfunknetzes (HPLMN) und eine zweite Mobilteilnehmeridentifizierung (IMSI2) aus dem Nummerbereich eines Partnemetzes (PPLMN) zugewiesen wird, wobei das Partnemetz über zusätzliche Roaming-Abkommen verfügt, dadurch gekennzeichnet,
dass die benannte erste Mobilteilnehmeridentifizierung (IMSI1 ) in der Heimdatei (HLR) des Heimmobilfunknetzes (HPLMN) abgelegt ist und die benannte zweite Mobilteilnehmeridentifizierung (IMSI2) aus der benannten ersten Mobilteilnehmeridentifizierung (IMSI1 ) umgerechnet wird, und
dass den beiden benannten Mobilteilnehmeridentifizierungen (IMSI1, IMSI2) eine gemeinsame Rufnummer (MSISDN) zugeteilt wird.

2. Telekommunikationsverfahren gemäss dem vorhergehenden Anspruch, dadurch gekennzeichnet, dass im Signalisierungsverkehr zwischen dem Partnemetz (PPLMN) und dem Heimmobilfunknetz (HPLMN) die benannte erste Mobilteilnehmeridentifizierung (IMSI1) in die benannte zweite Mobilteilnehmeridentifizierung (IMSI2) umgerechnet wird, respektive die benannte zweite Mobilteilnehmeridentifizierung (IMSI2) in die benannte erste Mobilteilnehmeridentifizierung (IMSI1) umgerechnet wird, wenn der Teilnehmer mit der zweiten Mobilteilnehmeridentifizierung (IMSI2) in ein besuchtes Mobilfunknetz (VPLMN, VPLMN') eingebucht ist, das ein Roaming-Abkommen mit dem Partnernetz (PPLMN) hat.

3. Telekommunikationsverfahren gemäss einem der vorhergehenden Ansprüche, dadurch gekennzeichnet, dass mindestens gewisse der benannten ersten und zweiten mit einer gemeinsamen Rufnummer (MSISDN) verknüpften Mobilteilnehmeridentifizierungen (IMSI1, IMSI2) auf einem gemeinsamen Identifizierungsmodul abgespeichert sind.

4. Telekommunikationsverfahren gemäss dem vorhergehenden Anspruch, dadurch gekennzeichnet, dass das benannte Identifizierungsmodul die zweite Mobilteilnehmeridentifizierung (IMSI2) aktiviert, wenn es sich mit der ersten benannten Mobilteilnehmeridentifizierung (IMSI1) in einem Netz nicht einloggen kann.

5. Telekommunikationsverfahren gemäss einem der Ansprüche 3 oder 4, dadurch gekennzeichnet, dass das benannte Identifiezierungsmodul mit einem einzigen Authentizitätsschlüssel für die beiden benannten Mobilteilnehmeridentifizierungen (IMSI1, IMSI2) programmiert wird, welcher Authentizitätsschlüssel zur Authentifizierung des Identifizierungsmoduls beim Einbuchen in ein Mobilfunknetz (HPLMN, VPLMN, VPLMN', PPLMN) verwendet wird.

6. Telekommunikationsverfahren gemäss einem der vorhergehenden Ansprüche, dadurch gekennzeichnet, dass bei der Umrechnung der benannten zweiten Mobilteilnehmeridentifizierung (IMSI2) aus der ersten Mobilteilnehmeridentifizierung (IMSI1) mindestens der Mobile Country Code und der Mobile Network Code der ersten Mobilteilnehmeridentfzierung (IMSI1) durch Werte aus dem Nummerbereich des Partnernetzes (PPLMN) ersetzt werden.

7. Telekommunikationsverfahren gemäss Anspruch 3, dadurch gekennzeichnet, dass mindestens gewisse der benannten ersten und zweiten mit einer gemeinsamen Rufnummer (MSISDN) verknüpften Mobilteilnehmeridentifizierungen (IMSI1, IMSI2), die auf demselben Identifizierungsmodul gespeichert werden, vom Teilnehmer mit Eingabemitteln des Endgerätes (1) aktiviert werden können.

8. Telekommunikationsverfahren gemäss einem der vorhergehenden Ansprüche, dadurch gekennzeichnet, dass für mindestens gewisse der benannten ersten und zweiten mit einer gemeinsamen Rufnummer (MSISDN) verknüpften Mobilteilnehmeridentifizierungen (IMSI1, IMSI2) dem betreffenden Teilnehmer separate Rechnungen erstellt werden.

9. Telekommunikationsverfahren gemäss einem der vorhergehenden Ansprüche, dadurch gekennzeichnet, dass für mindestens gewisse der benannten ersten und zweiten mit einer gemeinsamen Rufnummer (MSISDN) verknüpften Mobilteilnehmeridentifizierungen (IMSI1, IMSI2) dem betreffenden Teilnehmer eine gemeinsame Rechnung erstellt wird.

10. Telekommunikationsverfahren gemäss einem der vorhergehenden Ansprüche, dadurch gekennzeichnet, dass genannte Mobilfunknetze GSM-Netze sind.

## Claims

1. Telecommunications method which enables a subscriber of a home mobile radio network (HPLMN) to connect to a visited mobile radio network (VPLMN, VPLMN') without a roaming agreement with the home mobile radio network (HPLMN) in that a subscriber is assigned a first mobile subscriber identification (IMSI1) from the number range of his home mobile radio network (HPLMN) and a second mobile subscriber identification (IMSI2) from the number range of a partner network (PPLMN), the partner network having additional roaming agreements, characterised in that
the said first mobile subscriber identification (IMSI1) is filed in the home file (HLR) of the home mobile radio network (HPLMN), and the said second mobile subscriber identification (IMSI2) is converted from the first mobile subscriber identification (IMSI1), and
a common call number (MSISDN) is allocated to the two said mobile subscriber identifications (IMSI1, IMSI2).

2. Telecommunications method according to the preceding claim,
characterised in that, in the signalling traffic between the partner network (PPLMN) and the home mobile radio network (HPLMN), the said first mobile subscriber identification (IMSI1) is converted into the said second mobile subscriber identification (IMSI2), or respectively the said second mobile subscriber identification (IMSI2) is converted into the said first mobile subscriber identification (IMSI1), when the subscriber is checked into a visited mobile radio network (VPLMN, VPLMN') with the second mobile subscriber identification (IMSI2), which visited mobile radio network has a roaming agreement with the partner network (PPLMN),.

3. Telecommunications method according to one of the preceding claims, characterised in that at least certain ones of the said first and second mobile subscriber identifications (IMSI1, IMSI2) linked to a common call number (MSISDN) are stored on a common identification module.

4. Telecommunications method according to the preceding claim, characterised in that the said identification module activates the second mobile subscriber identification (IMSI2) when it cannot log on to a network with the first said mobile subscriber identification (IMSI1).

5. Telecommunications method according to one of the claims 3 or 4, characterised in that the said identification module is programmed with a single authenticity key for the two said mobile subscriber identifications (IMSI1, IMSI2), which authenticity key is used for authentication of the identification module upon checking into a mobile radio network (HPLMN, VPLMN, VPLMN', PPLMN).

6. Telecommunications method according to one of the preceding claims, characterised in that during conversion of the said second mobile subscriber identification (IMSI2) from the first mobile subscriber identification (IMSI1 ) at least the mobile country code and the mobile network code of the first mobile subscriber identification (IMSI1) are replaced with values from the number range of the partner network (PPLMN).

7. Telecommunications method according to claim 3, characterised in that at least certain ones of the said first and second mobile subscriber identifications (IMSI1, IMSI2) linked to a common call number (MSISDN) which are stored on the same identification module can be activated by the subscriber with input means of the terminal (1).

8. Telecommunications method according to one of the preceding claims, characterised in that for at least certain ones of the said first and second mobile subscriber identifications (IMSI1, IMSI2) linked to a common call number (MSISDN) separate bills are issued to the subscriber concerned.

9. Telecommunications method according to one of the preceding claims, characterised in that that for at least certain ones of the said first and second mobile subscriber identifications (IMSI1, IMSI1) linked to a common call number (MSISDN) a common bill is issued to the subscriber concerned.

10. Telecommunications method according to one of the preceding claims, characterised in that said mobile radio networks are GSM networks.

## Revendications

1. Procédé de télécommunications permettant à un abonné d'un réseau mobile terrestre public (RMTP) de rattachement de se raccorder à un réseau mobile terrestre public visité (RMTP visité, RMTP' visité) sans qu'il existe un accord de déplacement avec le réseau mobile terrestre public de rattachement (RMTP de rattachement), grâce au fait qu'est attribuée à un abonné une première identité internationale de station mobile (IISM1) dans la série de numéros de son réseau mobile terrestre public de rattachement (RMTP de rattachement) et une deuxième identité internationale de station mobile (IISM2) dans la série de numéros d'un réseau avec lequel le premier coopère (RMTP de coopération), le réseau de coopération ayant passé des accords supplémentaires de déplacement, caractérisé en ce que la première identité internationale de station mobile (IISM1) est déposée dans l'enregistreur de localisation nominale (ELN) du réseau mobile terrestre public (RMTP) de rattachement et que la deuxième identité internationale de station mobile (IISM2) est calculée à partir de la première identité internationale de station mobile (IISM1), et en ce qu'un numéro d'appel commun (SMRNIS) est attribué aux deux identités internationales de station mobile (IISM1, IISM2).

2. Procédé de télécommunications selon la revendication précédente, caractérisé en ce que, dans le trafic sémaphore entre le réseau de coopération (RMTP de coopération) et le réseau mobile terrestre public (RMTP) de rattachement, la première identité internationale de station mobile (IISM1) est convertie par le calcul en la deuxième identité internationale de station mobile (IISM2) ou la deuxième identité internationale de station mobile (IISM2) est convertie par le calcul en la première identité internationale de station mobile (IISM1) quand l'abonné est raccordé, avec la deuxième identité internationale de station mobile (IISM2), dans un réseau mobile terrestre public visité (RMTP visité, RMTP' visité) qui a passé un accord de déplacement avec le réseau de coopération (RMTP de coopération).

3. Procédé de télécommunications selon l'une des revendications précédentes, caractérisé en ce qu'au moins certaines des premières et deuxièmes identités internationales de station mobile (IISM1, IISM2) reliées à un numéro d'appel commun (SMRNIS) sont mises en mémoire sur un module d'identification commun.

4. Procédé de télécommunications selon la revendication précédente, caractérisé en ce que le module d'identification met en action la deuxième identité internationale de station mobile (IISM2) s'il ne parvient pas à se raccorder à un réseau avec la première identité internationale de station mobile (IISM1).

5. Procédé de télécommunications selon la revendication 3 ou 4, caractérisé en ce que le module d'identification est programmé avec une seul clef d'authenticité pour les deux identités internationales de station mobile (IISM1, IISM2), cette clef d'authenticité étant utilisé pour authentifier le module d'identification lors du raccordement à un réseau téléphonique mobile (RMTP de rattachement, RMTP visité, RMTP' visité, RMTP de coopération).

6. Procédé de télécommunications selon l'une des revendications précédentes, caractérisé en ce que, lors du calcul de conversion de la deuxième identité internationale de station mobile (IISM2) à partir de la première identité internationale de station mobile (IISM1), au moins l'indicatif de pays du mobile et l'indicatif de réseau du mobile de la première identité internationale de station mobile (IISM1) sont remplacés par des valeurs en provenance de la série de numéros du réseau de coopération (RMTP de coopération).

7. Procédé de télécommunications selon la revendication 3, caractérisé en ce qu'au moins certaines des premières et deuxièmes identités internationales de station mobile (IISM1, IISM2) reliées à un numéro d'appel commun (SMRNIS), qui sont mises en mémoire sur le même module d'identification, peuvent être mises en action par l'abonné à l'aide des moyens d'introduction du terminal (1).

8. Procédé de télécommunications selon l'une des revendications précédentes, caractérisé en ce que, au moins pour certaines des premières et deuxièmes identités internationales de station mobile (IISM1, IISM2) reliées à un numéro d'appel commun (SMRNIS), des factures distinctes sont établies pour l'abonné considéré.

9. Procédé de télécommunications selon l'une des revendications précédentes, caractérisé en ce que, au moins pour certaines des premières et deuxièmes identités internationales de station mobile (IISM1, IISM2) reliées à un numéro d'appel commun (SMRNIS), une facture commune est établie pour l'abonné considéré.

10. Procédé de télécommunications selon l'une des revendications précédentes, caractérisé en ce que les réseaux de téléphonie mobile mentionnés sont des réseaux GSM.
